# FASCICULE DE BREVET EUROPEEN

(11) **EP 3 898 332 B1**
(45) Date de publication et mention de la délivrance du brevet: **26.07.2023**
(21) Numéro de dépôt: 19795005.8
(22) Date de dépôt: 30.10.2019
(51) Int. Cl.: B60Q 3/82, B60Q 3/60, B60Q 3/62, B60Q 3/64, B60Q 3/43, B60Q 3/44, F21S 43/236, F21S 43/237, F21S 43/239, F21S 43/241, F21S 43/40, F21S 41/32, F21S 43/243, F21S 43/20, F21S 43/31, B60Q 3/74, B60K 37/00

(54) **DISPOSITIF D'ÉCLAIRAGE POUR PLAFONNIER DE VÉHICULE**
BELEUCHTUNGSVORRICHTUNG FÜR EINE DECKENLEUCHTE EINES FAHRZEUGS
LIGHTING DEVICE FOR A VEHICLE CEILING LAMP

(30) Priorité: 19.12.2018 FR 1873306
(43) Date de publication de la demande: 27.10.2021
(73) Titulaire: Valeo Comfort and Driving Assistance, 94000 Créteil (FR)
(72) Inventeur: CABANA, Thibault, 94046 Créteil CEDEX (FR); THORAILLER, Maryline, 94046 Créteil CEDEX (FR)
(74) Mandataire: Delplanque, Arnaud
(86) Numéro de dépôt international: PCT/EP2019/079614
(87) Numéro de publication internationale: WO 2020/126178

(56) Documents cités:
- EP-A1- 3 381 748
- WO-A1-90/04132
- DE-A1-102013 013 106
- DE-A1-102013 208 088
- DE-A1-102014 212 508
- DE-A1-102016 200 580
- US-A1- 2015 362 658
- US-A1- 2017 001 555

## Description

La présente invention concerne un dispositif d'éclairage pour un plafonnier d'habitacle de véhicule, comme connu des documents EP 3 381 748 A1 et US 2017/001555 A1.

Les habitacles de véhicules sont généralement pourvus d'un dispositif éclairant de plafonnier, aussi connu sous le nom de liseuse, fournissant au conducteur ou à un passager un éclairage d'appoint permettant par exemple de consulter une carte ou de lire un texte.

Ces dispositifs comportent généralement une ou plusieurs sources de lumière, implémentées dans le plafonnier du véhicule, et le conducteur ou passager actionne un commutateur pour allumer ou éteindre la source de lumière. Le faisceau lumineux issu de la source est mis en forme (concentré et uniformisé) puis dirigé vers une position attendue du conducteur ou du passager, généralement les sièges qu'ils sont sensés occuper.

Dans le cadre de choix esthétiques d'épuration de l'habitacle des véhicules, il est connu de disposer les sources de lumière derrière une vitre, recouverte d'une couche opaque pour la majorité de sa surface, qui est recouverte d'une surface tactile dont l'actionnement par contact avec le doigt ou la main d'un utilisateur allume ou éteint l'éclairage, dont le faisceau passe à travers la vitre via une ouverture dans la couche opaque.

Pour délimiter la portion de la surface tactile dont l'actionnement déclenche l'allumage de l'éclairage, on peut utiliser un contour rétroéclairé, entourant l'ouverture par laquelle passe le faisceau d'éclairage. Le rétroéclairage présente l'avantage de rendre visible la portion de la surface tactile formant actionneur dans le noir ou la pénombre d'un habitacle de véhicule la nuit.

Pour obtenir ce contour rétroéclairé, on dispose alors dans le plafonnier une source de lumière de délimitation, avec un guide de lumière associé.

La présence de deux ensembles de diodes formant les sources de lumière d'éclairage et de délimitation, avec des guides ou lentilles associées, ainsi que la présence potentielle d'autres éléments sur un circuit imprimé portant les diodes tels que des haut-parleurs de plafonnier (dans le cadre d'un dispositif multimédia) impliquent un écart entre ledit circuit imprimé et la surface apparente, avec laquelle l'utilisateur interagit.

Cet écart, avec la présence de deux sources de lumière emboîtées, de délimitation et d'éclairage, rend l'acheminement des faisceaux lumineux complexes, surtout en prenant en compte le fait que les faisceaux lumineux doivent être inclinés et orientés vers le conducteur et le passager à partir d'un plafonnier central.

Afin de résoudre au moins partiellement le problème précédemment mentionné, l'invention a pour objet un dispositif de génération de lumière pour plafonnier d'habitacle de véhicule avec les caractéristiques de la revendication 1.

Le guide de lumière d'éclairage permet d'obtenir un faisceau incliné, qui est envoyé dans l'ouverture via la fenêtre axiale. Les guides de lumière utilisés permettent de positionner le circuit imprimé portant les sources de lumière en retrait par rapport à la façade du plafonnier.

Ledit dispositif peut en outre présenter une ou plusieurs des caractéristiques suivantes prises seules ou en combinaison.

Le guide de lumière de délimitation peut comporter au moins un pilier axial venant de matière avec l'embase pour chaque source de lumière de délimitation, formant guides de lumière pour la lumière issue des sources de lumière de délimitation en direction de l'embase, présentant :

des parois tangentielles parallèles à celles de l'embase et des parois radiales s'évasant en direction de l'embase,

une paroi supérieure formant un dioptre d'entrée située face à une des sources de lumière de délimitation.

L'embase annulaire peut comporter une portion de matériau diffusant la lumière pour uniformiser l'intensité lumineuse sur la surface annulaire du dioptre de sortie.

Le dioptre d'entrée du guide de lumière d'éclairage peut être réalisé sous forme de lentille de Fresnel dont le foyer est situé au niveau de la source de lumière d'éclairage.

Le guide de lumière d'éclairage peut comporter une lentille au niveau du dioptre de sortie, dont le foyer est situé au niveau de l'ouverture.

Le guide de lumière d'éclairage peut être réalisé sous forme d'un cylindre tronqué diagonalement, la surface de troncature diagonale formant la surface de réflexion totale.

Le guide de lumière d'éclairage peut être réalisé sous forme d'un coude, comportant deux portions cylindriques, dont l'une porte le dioptre d'entrée, et l'autre le dioptre de sortie, le coude entre les deux portions cylindriques portant la surface de réflexion totale.

L'invention se rapporte aussi à un plafonnier de véhicule, caractérisé en ce qu'il comporte au moins un dispositif tel que précédemment mentionné, et en ce que le faisceau d'éclairage est orienté vers un emplacement d'un occupant du véhicule.

Ledit plafonnier peut comporter en outre une façade, opaque sur la majorité de sa surface, comportant une fenêtre circulaire transparente située face à une extrémité du tube de séparation opposée aux sources de lumière formant l'ouverture.

Ledit plafonnier peut comporter en outre une fenêtre annulaire face au dioptre de sortie de l'embase annulaire du guide de lumière de délimitation.

La façade peut comporter un revêtement ou une couche opaque sur la majeure partie de sa surface, et en ce que les fenêtres circulaires et annulaires présenter une transparence comprise entre 10 et 50%.

La façade peut comporter au moins une surface tactile, qui, lorsqu'un contact avec une partie du corps d'un utilisateur est détecté, allume ou éteint la source de lumière d'éclairage.

Ladite surface tactile peut être disposée au niveau de l'ouverture.

Le plafonnier peut en particulier comporter deux dispositifs tels que précédemment mentionné, l'un émettant un faisceau d'éclairage en direction du conducteur du véhicule, l'autre émettant un faisceau d'éclairage en direction d'un passager avant du véhicule.

D'autres caractéristiques et avantages de l'invention apparaîtront plus clairement à la lecture de la description suivante, donnée à titre d'exemple illustratif et non limitatif, et des dessins annexés parmi lesquels :

[Fig. 1] montre schématiquement un habitacle de véhicule, avec un plafonnier présentant deux dispositifs d'éclairage,

[Fig. 2] montre un dispositif d'éclairage hors du plafonnier,

[Fig. 3] est une vue en coupe de guide de lumière d'éclairage pour le dispositif de la figure 2,

[Fig. 4] est une vue de côté d'un mode de réalisation alternatif de guide de lumière de la figure 3,

[Fig. 5] est une vue en perspective d'un module d'éclairage de délimitation pour le dispositif de la figure 2,

[Fig. 6] est une vue de dessus du dispositif de la figure 2,

[Fig. 7] est une représentation en perspective d'un mode de réalisation de plafonnier combinant deux dispositifs selon la figure 2.

Les réalisations décrites en faisant référence aux figures sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres modes de réalisation.

Les termes tels que "premier" et "deuxième" utilisés plus bas sont donnés pour un simple référencement sans indiquer de préférence ou d'ordre de montage particulier.

Un certain nombre de qualificatifs de position tels que "au-dessus" ou "au-dessous", "en bas", "à gauche" etc. sont aussi utilisés en lien avec les figures. Ces qualificatifs ne servent qu'à aider à la compréhension des figures décrites et du mode de réalisation qu'elles représentent. En particulier, le même mode de réalisation de module de commande peut indifféremment être monté sur des surfaces orientées de différentes façon.

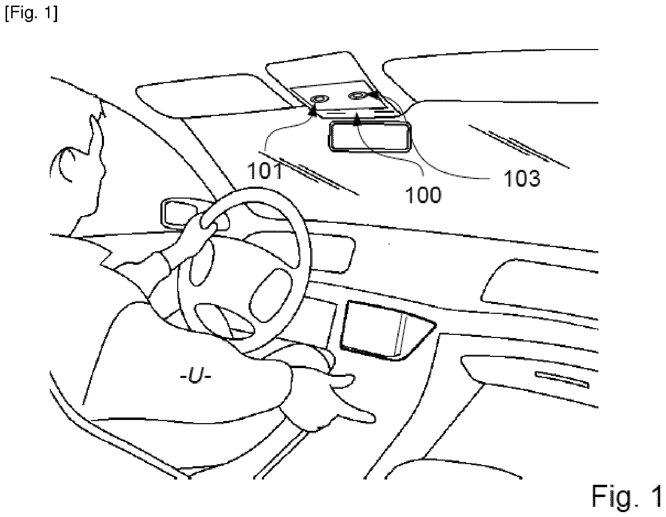

La figure 1 représente schématiquement un habitacle de véhicule automobile, comportant un plafonnier 100 dans lequel un dispositif éclairant est disposé. En particulier, deux sorties de lumière 101, 103 par lesquelles un faisceau de lumière est envoyé respectivement en direction d'un utilisateur U, conducteur ou passager du véhicule.

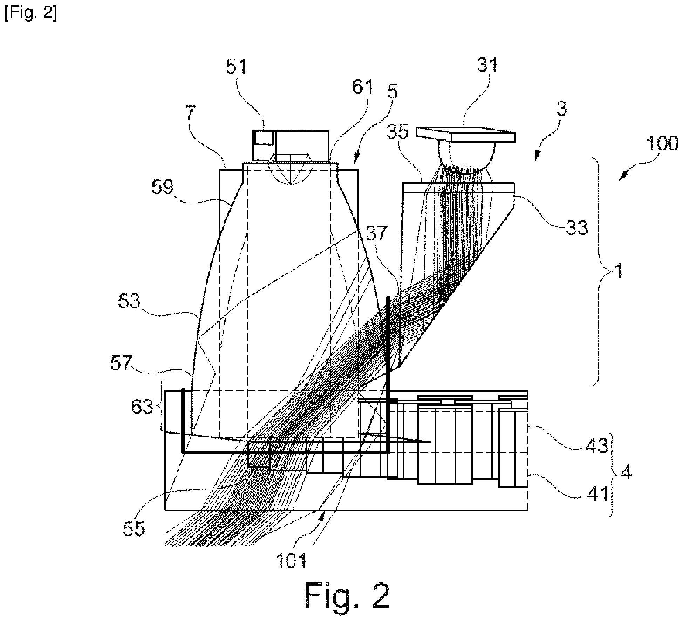

Le plafonnier 100 est partiellement représenté en coupe en figure 2. En particulier, en figure 2, une seule ouverture 101 est représentée avec un seul dispositif de génération de lumière.

Le dispositif de génération de lumière 1 comporte en particulier un module de génération de lumière d'éclairage 3, et un module de génération de lumière de délimitation 5. Le module de génération de lumière d'éclairage 3 produit un faisceau d'éclairage de l'habitacle, par exemple pour la lecture d'une carte, et donc relativement puissant. Le module de génération de lumière de délimitation 5 fournit un éclairage servant à repérer et/ou délimiter la portion de surface portant une surface tactile au niveau des ouvertures 101, 103, par exemple pour permettre à un utilisateur U d'allumer le module de génération de lumière d'éclairage 3 dans un habitacle sombre (nuit, tunnel, parking souterrain etc.).

Le module de génération de lumière d'éclairage 3 comporte en particulier une source de lumière d'éclairage 31, par exemple une diode de forte puissance, en particulier une diode blanche typiquement de plus de 100 lumens, et un guide de lumière d'éclairage 33. Le dispositif de génération de lumière d'éclairage 3 est en particulier déporté selon une direction radiale, parallèle au plan de l'ouverture 101, par rapport à ladite ouverture.

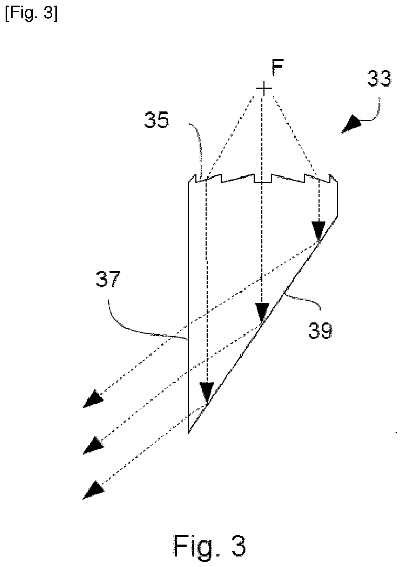

Le guide de lumière d'éclairage 33 est montré plus en détail en figure 3 et discuté ci-après en lien avec cette figure.

Le module de génération de lumière de délimitation 5 comporte une source de lumière de délimitation 51, pouvant en particulier être rattachée au même circuit imprimé plan que la source de lumière d'éclairage 31. La source de lumière de délimitation 51 peut par exemple être une diode électroluminescente de puissance moins importante (30-50 lumens), éventuellement colorée.

Le dispositif de génération de lumière de délimitation 5 comporte aussi un guide de lumière de délimitation 53 qui entoure un tube de séparation 7. Le guide de lumière de délimitation 53 comporte un dioptre de sortie 55 ici annulaire.

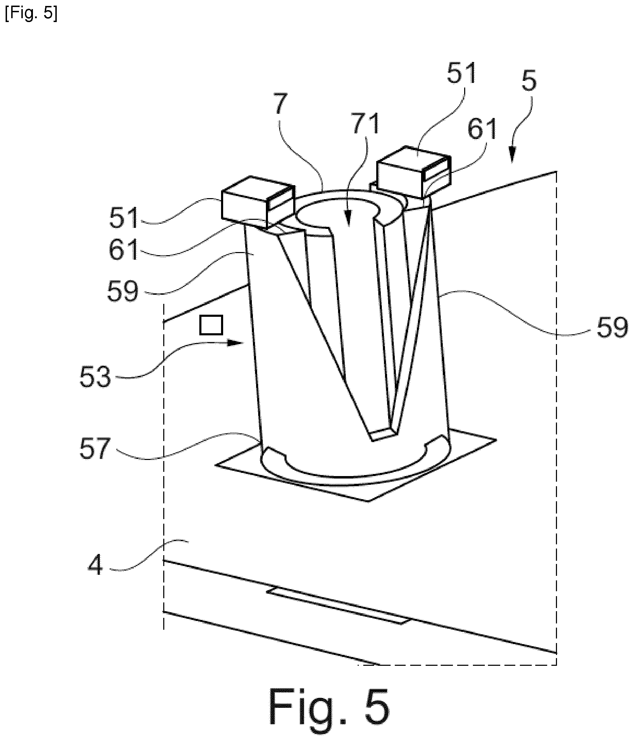

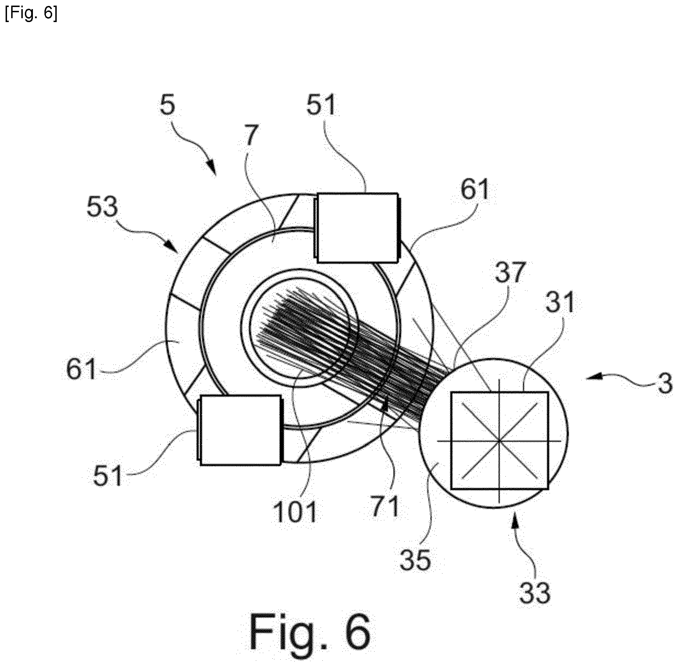

Le tube de séparation 7 est tubulaire, en matériau opaque au rayonnement visible, avec un axe de révolution parallèle à celui du guide de lumière de délimitation 53, de section radiale en forme de "c" formant une fenêtre axiale 71 (voir figures 5 et 6) qui est orientée en direction du module d'éclairage 3. Le faisceau généré par ledit module d'éclairage 3 passe par ladite fenêtre axiale 71 et passe alors par l'ouverture 101.

Le tube de séparation 7 peut soit être une pièce séparée, intégrée dans l'assemblage, ou bien être une pièce venant de matière avec par exemple la façade 4, ou un support fixe portant par exemple le circuit imprimé sur lequel les sources de lumière 31, 51 sont disposées. Dans le cas d'un tube de séparation 7 venant de matière avec, par exemple, la façade 4, ledit cache se présente sous forme de crête ou excroissance de la façade 4.

Le guide de lumière de délimitation 53 est réalisé en matériau transparent, d'indice relativement élevé tel que du polyméthacrylate de méthyle PMMA (indice supérieur à 1,2) afin de favoriser les réflexions totales sur les parois axiales dudit guide 53. Le PMMA présente en outre l'avantage d'être léger et facile à mouler, par exemple par injection.

Ledit guide de lumière 53 comporte une embase 57 dans le prolongement axial du dioptre de sortie 55, ici donc sensiblement tubulaire. A partir de l'embase annulaire 57 s'étendent des prolongements axiaux 59, prolongeant axialement au moins par portion l'embase 57, comportant à leur extrémité opposée à l'embase des dioptres d'entrée 61 du guide de lumière de délimitation 51. Ledit guide de lumière 53 comporte ici en particulier deux prolongement axiaux 59 avec chacun un dioptre d'entrée 61.

Les prolongements axiaux 59 sont par exemple des piliers axiaux venant de matière avec l'embase 57, évasés en direction de ladite embase 57 pour un meilleur guidage du faisceau lumineux, et en particulier répartir la luminosité sur tout le dioptre de sortie 55. Les prolongements axiaux comportent donc des parois tangentielles parallèles à celles de la base annulaire et des parois radiales s'évasant en direction de l'embase annulaire, et une paroi supérieure formant le dioptre d'entrée 61.

Les dioptres d'entrée 61 font, à l'état assemblé du plafonnier 100, face aux sources de lumière de délimitation 51. Les prolongements axiaux 59 et les sources de lumière de délimitation 51 sont régulièrement répartis sur le pourtour annulaire du guide de lumière de délimitation 51 tubulaire.

Une portion inférieure 63 de l'embase du guide de lumière de délimitation 51, au niveau du dioptre de sortie 55, est réalisée en matériau diffusant, par exemple par addition de particules de verre ou bien par frittage de particules de PMMA, de sorte à répartir la luminosité issue des sources de lumière de délimitation 51.

Le plafonnier 100 comporte en outre une façade 4, opaque sur la majorité de sa surface frontale apparente pour les occupants du véhicule. La façade 4 porte les ouvertures circulaires 101, 103 transparentes et situées chacune face à une extrémité du tube central 7 du côté opposé aux sources de lumière 31, 51, et au dioptre de sortie 55 du guide de lumière de délimitation 53. Les ouvertures 101, 103 présentent notamment une transparence comprise entre 10 et 40%, par laquelle la lumière émise par les sources 31, 51 et guidée par les guides 33, 53 est acheminée vers les portions de l'habitacle à éclairer.

Une configuration particulière prévoit que les ouvertures 101, 103 comportent chacune une fenêtre circulaire, située en face du dioptre de sortie 37 du guide de lumière d'éclairage 33, et une fenêtre annulaire entourant l'ouverture circulaire, de dimensions correspondant à celles du dioptre de sortie 57 du guide de lumière de délimitation 53, située face audit dioptre de sortie 57.

La lumière d'éclairage et la lumière de délimitation d'une même ouverture sont alors issues chacune d'une fenêtre différente de l'ouverture 101, 103.

En particulier, la façade 4 comporte une plaque de matériau transparent 41, et un revêtement ou une couche opaque 43 colorée sur la majeure partie de sa surface, exception faite des portions correspondant aux ouvertures 101, 103.

Dans le mode de réalisation de la figure 2, la plaque de matériau colorée 43 est relativement épaisse (quelques millimètres à 1cm par exemple). Le fait que les ouvertures 101, 103 soient formées par un retrait de ladite plaque de matériau opaque 43 entraîne la présence de tranchées ou logement dans lesquelles une portion des guides de lumière 33, 53 peut être insérée pour positionnement et maintient au cours de l'assemblage.

Par exemple, une portion du guide de lumière de délimitation 51, ici l'embase annulaire 63 est insérée dans le logement ainsi formé.

La couche transparente 41 est en particulier recouverte sur sa surface frontale par une surface tactile transparente, qui, lorsqu'un contact avec une partie du corps d'un utilisateur U (doigt, main) est détecté, allume ou éteint la source de lumière d'éclairage 31. Le contact avec la surface tactile peut aussi être utilisé pour respectivement éteindre ou allumer la source de lumière de délimitation 53 lorsque la source de lumière d'éclairage 31 est allumée ou éteinte.

La surface tactile, ou au moins une portion de sa surface active est avantageusement limitée à la surface délimitée par les ouvertures et éventuellement leur voisinage immédiat. La lumière du module de génération de lumière de délimitation 5 sert alors à indiquer et délimiter aux occupants la portion de surface frontale sur laquelle presser un doigt ou une main pour allumer et/ou éteindre la source de lumière d'éclairage 31.

La ou des ouvertures 101, 103 (figure 1) peuvent comporter respectivement une lentille additionnelle, éventuellement de Fresnel, pour une mise en forme du faisceau de lumière d'éclairage. Cette lentille additionnelle est avantageusement disposée sur la face interne (vers les sources de lumière 31, 51) des ouvertures 101, 103 pour un aspect uniforme de la surface apparente. Une disposition desdites lentilles additionnelles sur la surface externe peut cependant rendre les ouvertures 101, 103 plus faciles à trouver par le toucher en formant un reliefs.

La figure 3 est une vue en coupe d'un guide de lumière d'éclairage 33, pris séparément. Le guide de lumière d'éclairage 33 est aussi réalisé en matériau transparent, d'indice relativement élevé tel que du polyméthacrylate de méthyle PMMA (indice supérieur à 1,2) afin de causer des réflexions totale sur les parois autres que les dioptres d'entrée 35 et de sortie 37.

Le guide de lumière d'éclairage 31 présente un corps en forme de tube tronqué par un plan incliné par rapport à l'axe du tube du côté opposé à la source de lumière d'éclairage 31. La surface résultante de la troncature forme une surface de réflexion totale 39, plane et sommairement ovale.

Le dioptre d'entrée 35 du guide de lumière d'éclairage est destiné à être disposé face à la source de lumière d'éclairage 31.

Dans le mode de réalisation de la figure 3, le dioptre d'entrée 35 est réalisé sous forme de lentille convergente, en particulier de lentille de Fresnel pour une plus grande compacité. Le foyer F de la lentille est préférentiellement situé au niveau de la position, à l'état assemblé du plafonnier 100, de la source de lumière d'éclairage 31. De la sorte, le faisceau lumineux est collimaté par la lentille formée par le dioptre d'entrée 35.

Le trajet de trois rayons lumineux est représenté en figure 3 sous forme de flèche pointillée. Les rayons, issus de la diode au niveau du foyer de la lentille formée par le dioptre d'entrée 35 rentrent dans le guide de lumière d'éclairage 33 par ledit dioptre 35. Les rayons sont alors collimatés par ladite lentille, et se propagent donc de façon sensiblement parallèle entre eux et à l'axe du tube du guide de lumière d'éclairage 33.

Les rayons sont alors réfléchis sur la surface de réflexion totale 39, ils rencontrent le dioptre de sortie 37 avec un angle important, et sortent alors par la surface axiale incurvée du guide de lumière 33 formant ledit dioptre de sortie 37, avec une direction moyenne inclinée par rapport à l'axe du corps cylindrique dudit guide de lumière d'éclairage 33.

Selon un mode de réalisation non représenté, le guide de lumière d'éclairage 33 peut comporter un dioptre de sortie 37, en forme de lentille, par exemple sphérique, dont le foyer est proche du centre de l'ouverture 101 à travers laquelle le faisceau lumineux est introduit dans l'habitacle.

Selon un autre mode de réalisation, le plafonnier comporte une ouverture circulaire 101 de dimensions réduites, et une ouverture annulaire additionnelle, dont l'emplacement et les dimensions correspondent à ceux du dioptre de sortie 57 du guide de lumière de délimitation 53.

Les ouvertures présentent en particulier une transparence comprise entre 10 et 90% dans le domaine spectral visible. La plaque transparente 41 peut cependant être teintée dans la masse avec des colorants sombres ou noirs, de sorte à ramener la transparence à 10 à 50%. Ces valeurs de transparence, avec une teinte sombre, permettent de rendre les ouvertures imperceptibles en l'absence d'éclairage à travers celles-ci.

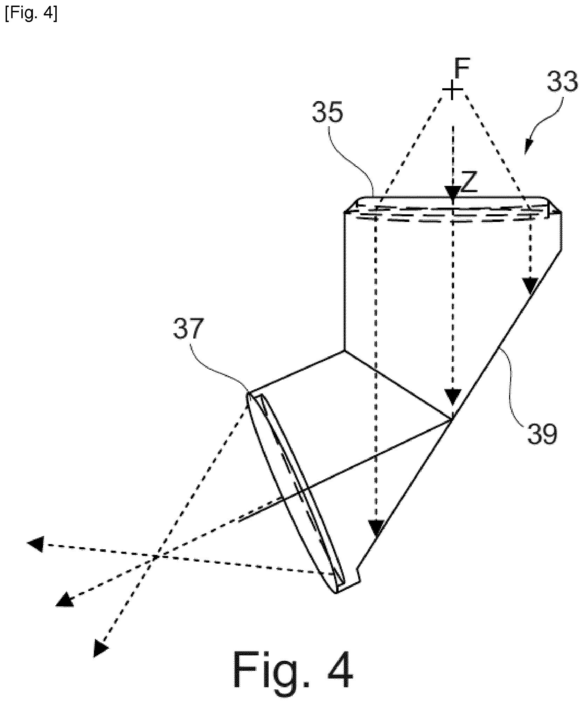

La figure 4 est une représentation en perspective d'un mode de réalisation alternatif de guide de lumière d'éclairage 33.

Dans ce mode de réalisation, le guide de lumière d'éclairage 33 est réalisé sous forme d'un coude. Il comporte deux portions cylindriques, dont l'une porte le dioptre d'entrée 33 ici sous forme de lentille de Fresnel, et l'autre le dioptre de sortie, ici aussi réalisé sous forme de lentille de Fresnel. Au niveau du coude entre les deux portions cylindriques se trouve la surface de réflexion totale 39.

Les rayons issus de la source de lumière d'éclairage 31 suivent alors un trajet similaire à celui de la figure 3 jusqu'au dioptre de sortie 37. En particulier, le faisceau lumineux collimaté et reflété dans ledit guide de lumière 33 est focalisé par le dioptre de sortie 37. Le faisceau lumineux peut alors être guidé à travers une ouverture plus étroite, mais le faisceau obtenu sera divergent de façon plus importante. Un tel faisceau serait par exemple adapté au cas d'un éclairage d'ambiance, activé notamment lorsqu'une portière est ouverte.

Le module de génération de lumière de délimitation 5 et le tube de séparation 7 sont montrés en perspective en figure 5, disposés sur une portion de façade 4.

La fenêtre axiale 71 et l'ouverture formée entre deux prolongements axiaux 59 sont superposées de sorte à permettre une circulation de lumière à leur niveau.

En figure 6, le dispositif de génération de lumière 1 est montré en vue de dessus, l'alignement de l'ouverture entre deux prolongements axiaux 59, la fenêtre axiale 71 et le dioptre de sortie 37 du guide de lumière de délimitation 33.

Des rayons lumineux issus du dioptre de sortie 37 du guide de lumière de délimitation 33 sont représentés en figure 6. Lesdits rayons lumineux sortent dudit dioptre 37 majoritairement en direction de l'ouverture et de la fenêtre axiale 71, à travers lesquelles ils passent jusqu'à atteindre l'ouverture 101 de la façade 4.

Le tube de séparation 7 permet d'éviter que des rayons lumineux issus du module de génération de lumière d'éclairage 3 rentrent dans le guide de lumière de délimitation 53 et que des rayons de lumière issus du module de génération de lumière de délimitation 5 entrent dans le guide de lumière d'éclairage 33. Les effets lumineux d'éclairage et de délimitation de la zone d'actionnement sont ainsi séparés, pour améliorer la qualité perçue du plafonnier 100 : lorsque le module de génération de lumière d'éclairage 3 est éteint, la seule lumière visible est celle du module de génération de lumière de délimitation 5 et réciproquement.

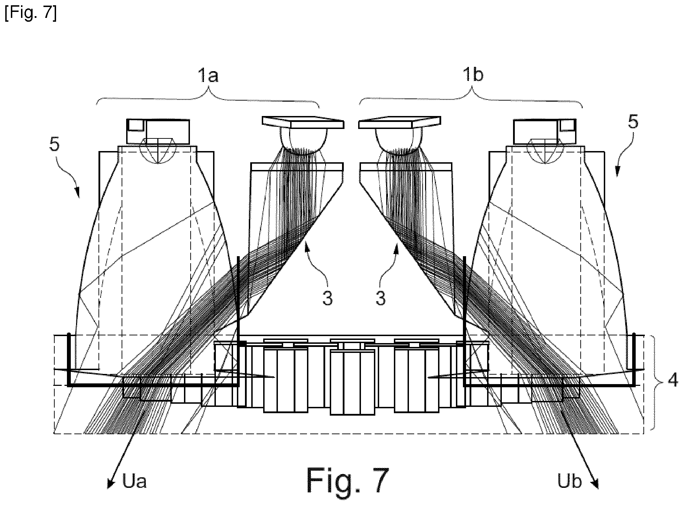

La figure 7 est une représentation schématique d'un plafonnier 100 comportant deux dispositifs de génération de lumière 1a et 1b.

Chacun des dispositifs de génération de lumière 1a, 1b est disposé dans une position symétrique par rapport à l'autre, chacun au niveau d'une des deux ouvertures 101, 103.

Le faisceau lumineux issu du module de génération de lumière d'éclairage 3 du premier dispositif 1a est dirigé vers une position attendue d'un premier utilisateur Ua, par exemple le conducteur du véhicule. La position attendue dudit premier utilisateur Ua est alors le siège conducteur du véhicule.

Le faisceau lumineux issu du module de génération de lumière d'éclairage 3 du deuxième dispositif 1b est dirigé vers une position attendue d'un deuxième utilisateur Ub par exemple le passager avant du véhicule. La position attendue dudit premier utilisateur Ub est alors le siège passager avant du véhicule.

Le plafonnier 100 ainsi obtenu peut aisément être disposé au niveau du rétroviseur d'un véhicule usuel. Les faisceaux d'éclairage sont alors dirigés vers les occupants (passager avant et conducteur) de façon à leur permettre de lire une carte, trouver un objet ou autre. La lumière du module de génération de lumière de délimitation 3 permet de rendre visible les zones sur lesquelles une pression déclenchera l'émission d'un faisceau de lumière d'éclairage, en particulier dans un environnement sombre, par exemple la nuit ou dans un tunnel ou garage.

## Revendications

1. Dispositif de génération de lumière pour plafonnier (100) d'habitacle de véhicule, **caractérisé en ce qu'**il comporte :
- un tube de séparation (7) en matériau opaque au rayonnement utilisé, destiné à être disposé sur une ouverture (101) formant une sortie de lumière d'éclairage, tubulaire le long d'un axe orthogonal à l'ouverture et de section radiale en forme de "c" formant une fenêtre axiale (71),
un guide de lumière de délimitation (53), entourant le tube de séparation (7) présentant :
- un dioptre de sortie (55) annulaire,
- une embase (57) dans le prolongement axial du dioptre de sortie, des prolongements axiaux (59), prolongeant axialement au moins par portion l'embase (57), comportant à leur extrémité opposée à l'embase (57) des dioptres d'entrée (61), disposés face à des sources de lumière de délimitation (51),
- une source de lumière d'éclairage (31),
- un guide de lumière d'éclairage (33), situé axialement face à la source de lumière d'éclairage (31) et radialement déporté de l'ouverture (101) comportant :
- un dioptre d'entrée (35), disposé face à la source de lumière d'éclairage (31),
- une surface de réflexion totale (39), sur laquelle de la lumière entrant par le dioptre d'entrée (35) est réfléchie à un angle d'inclinaison prédéterminé par rapport à la normale au dioptre d'entrée (35),
- un dioptre de sortie (37), par lequel la lumière réfléchie sur la surface de réflexion totale (39) est émise en direction de l'ouverture (101), la fenêtre axiale (71) étant orientée en direction du guide de lumière (33) de sorte que le faisceau généré par la source de lumière d'éclairage (31) et réfléchi par la surface de réflexion totale (39) passe par ladite fenêtre axiale (71) et par l'ouverture (101).

2. Dispositif selon la revendication 1, **caractérisé en ce que** les prolongements axiaux (59) sont sous la forme de piliers axiaux de sorte que le guide de lumière de délimitation (53) comporte au moins un pilier axial (59) venant de matière avec l'embase (57) pour chaque source de lumière de délimitation (51), chaque pilier axial (59) formant guide de lumière pour la lumière issue des sources de lumière de délimitation (51) en direction de l'embase (57), présentant :
- des parois tangentielles parallèles à celles de l'embase (57) et des parois radiales s'évasant en direction de l'embase (7)
- une paroi supérieure formant un dioptre d'entrée (61) située face à une des sources de lumière de délimitation (51).

3. Dispositif selon l'une des revendications précédentes **caractérisé en ce que** l'embase (57) est annulaire et comporte une portion de matériau diffusant la lumière (63) pour uniformiser l'intensité lumineuse sur la surface annulaire du dioptre de sortie (53).

4. Dispositif selon l'une des revendications précédentes, **caractérisé en ce que** le dioptre d'entrée (35) du guide de lumière d'éclairage est réalisé sous forme de lentille de Fresnel dont le foyer (F) est situé au niveau de la source de lumière d'éclairage (31).

5. Dispositif selon l'une des revendications précédentes, **caractérisé en ce qu'**il comporte une lentille au niveau du dioptre de sortie (33), dont le foyer (F) est situé au niveau de l'ouverture (101).

6. Dispositif selon l'une des revendications précédentes, **caractérisé en ce que** le guide de lumière d'éclairage (33) est réalisé sous forme d'un cylindre tronqué diagonalement, la surface de troncature diagonale formant la surface de réflexion totale (39).

7. Dispositif selon l'une des revendications 1 à 5, **caractérisé en ce que** le guide de lumière d'éclairage (33) est réalisé sous forme d'un coude, comportant deux portions cylindriques, dont l'une porte le dioptre d'entrée (35), et l'autre le dioptre de sortie (37), le coude entre les deux portions cylindriques portant la surface de réflexion totale (39).

8. Plafonnier de véhicule, **caractérisé en ce qu'**il comporte au moins un dispositif (1) selon l'une des revendications précédentes, et **en ce que** le faisceau d'éclairage est orienté vers un emplacement d'un occupant (U) du véhicule.

9. Plafonnier de véhicule selon la revendication précédente, **caractérisé en ce qu'**il comporte en outre une façade (41), opaque sur la majorité de sa surface, comportant une fenêtre circulaire transparente située face à une extrémité du tube de séparation opposée aux sources de lumière, ladite fenêtre circulaire transparente formant l'ouverture (101).

10. Plafonnier de véhicule selon la revendication précédente, **caractérisé en ce qu'**il comporte en outre une fenêtre annulaire face au dioptre de sortie (57) de l'embase annulaire du guide de lumière de délimitation (53).

11. Plafonnier de véhicule selon la revendication précédente, **caractérisé en ce que** la façade (4) comporte un revêtement ou une couche opaque (43) sur la majeure partie de sa surface, et **en ce que** les fenêtres circulaires et annulaires présentent une transparence comprise entre 10 et 50%.

12. Plafonnier de véhicule selon l'une des revendications 9 ou 10, **caractérisé en ce que** la façade comporte au moins une surface tactile, qui, lorsqu'un contact avec une partie du corps d'un utilisateur (U) est détecté, allume ou éteint la source de lumière d'éclairage (31).

13. Plafonnier de véhicule selon la revendication précédente, **caractérisé en ce que** la surface tactile est disposée au niveau de l'ouverture (101).

14. Plafonnier de véhicule selon l'une des revendications 8 à 13, **caractérisé en ce qu'**il comporte deux dispositifs (1a, 1b) selon l'une des revendications 1 à 7, l'un émettant un faisceau d'éclairage en direction du conducteur du véhicule (Ua), l'autre émettant un faisceau d'éclairage en direction d'un passager avant du véhicule (Ub)

## Patentansprüche

1. Vorrichtung zur Erzeugung von Licht für eine Deckenleuchte (100) eines Fahrgastraums eines Fahrzeugs, **dadurch gekennzeichnet, dass** sie Folgendes umfasst:
- ein Trennrohr (7) aus einem für die verwendete Strahlung undurchlässigen Material, das dazu bestimmt ist, an einer Öffnung (101), die einen Beleuchtungslichtausgang bildet, angeordnet zu sein, entlang einer zu der Öffnung orthogonalen Achse rohrförmig ist und einen radialen Querschnitt in Form eines "c" aufweist und ein axiales Fenster (71) bildet, einen Begrenzungslichtleiter (53), der das Trennrohr (7) umgibt und Folgendes aufweist:
- ein ringförmiges Ausgangsdiopter (55),
- eine Basis (57) in der axialen Verlängerung des Ausgangsdiopters, wobei axiale Verlängerungen (59), die die Basis (57) mindestens abschnittsweise axial verlängern, an ihrem zu der Basis (57) entgegengesetzten Ende Eingangsdiopter (61) umfassen, die gegenüber von Begrenzungslichtquellen (51) angeordnet sind,
- eine Beleuchtungslichtquelle (31),
- einen Beleuchtungslichtleiter (33), der sich axial gegenüber der Beleuchtungslichtquelle (31) befindet und radial von der Öffnung (101) versetzt ist, der Folgendes umfasst:
- ein Eingangsdiopter (35), das gegenüber der Beleuchtungslichtquelle (31) angeordnet ist,
- eine Totalreflexionsoberfläche (39), an der Licht, das durch das Eingangsdiopter (35) eintritt, mit einem vorbestimmten Neigungswinkel in Bezug auf die zu dem Eingangsdiopter (35) Normale reflektiert wird,
- ein Ausgangsdiopter (37), durch das das an der Totalreflexionsoberfläche (39) reflektierte Licht in Richtung der Öffnung (101) emittiert wird,
wobei das axiale Fenster (71) in Richtung des Lichtleiters (33) ausgerichtet ist, sodass der durch die Beleuchtungslichtquelle (31) erzeugte und durch die Totalreflexionsoberfläche (39) reflektierte Strahl durch das axiale Fenster (71) und durch die Öffnung (101) verläuft.

2. Vorrichtung nach Anspruch 1, **dadurch gekennzeichnet, dass** die axialen Verlängerungen (59) die Form von axialen Säulen aufweisen, sodass der Begrenzungslichtleiter (53) für jede Begrenzungslichtquelle (51) mindestens eine axiale Säule (59) umfasst, die mit der Basis (57) einstückig ausgebildet ist, wobei jede axiale Säule (59) einen Lichtleiter für das Licht bildet, das von den Begrenzungslichtquellen (51) in Richtung der Basis (57) abgegeben wird, aufweisend:
- tangentiale Wände, die zu denjenigen der Basis (57) parallel sind, und radiale Wände, die sich in Richtung der Basis (7) aufweiten,
- eine obere Wand, die ein Eingangsdiopter (61) bildet und sich gegenüber einer der Begrenzungslichtquellen (51) befindet.

3. Vorrichtung nach einem der vorhergehenden Ansprüche, **dadurch gekennzeichnet, dass** die Basis (57) ringförmig ist und einen Abschnitt aus einem Material zur Streuung des Lichts (63) umfasst, um die Lichtintensität an der ringförmigen Oberfläche des Ausgangsdiopters (53) zu vergleichmäßigen.

4. Vorrichtung nach einem der vorhergehenden Ansprüche, **dadurch gekennzeichnet, dass** das Eingangsdiopter (35) des Beleuchtungslichtleiters in Form einer Fresnel-Linse hergestellt ist, deren Brennpunkt (F) sich im Bereich der Beleuchtungslichtquelle (31) befindet.

5. Vorrichtung nach einem der vorhergehenden Ansprüche, **dadurch gekennzeichnet, dass** sie im Bereich des Ausgangsdiopters (33) eine Linse umfasst, deren Brennpunkt (F) sich im Bereich der Öffnung (101) befindet.

6. Vorrichtung nach einem der vorhergehenden Ansprüche, **dadurch gekennzeichnet, dass** der Beleuchtungslichtleiter (33) in Form eines diagonal abgeschnittenen Zylinders hergestellt ist, wobei die diagonale Schnittoberfläche die Totalreflexionsoberfläche (39) bildet.

7. Vorrichtung nach einem der Ansprüche 1 bis 5, **dadurch gekennzeichnet, dass** der Beleuchtungslichtleiter (33) in Form eines Kniestücks hergestellt ist, das zwei zylindrische Abschnitte umfasst, von denen einer das Eingangsdiopter (35) und der andere das Ausgangsdiopter (37) trägt, wobei das Kniestück zwischen den zwei zylindrischen Abschnitten die Totalreflexionsoberfläche (39) trägt.

8. Deckenleuchte eines Fahrzeugs, **dadurch gekennzeichnet, dass** sie mindestens eine Vorrichtung (1) nach einem der vorhergehenden Ansprüche umfasst und dass der Beleuchtungsstrahl zu einem Sitzplatz eines Insassen (U) des Fahrzeugs gerichtet ist.

9. Deckenleuchte eines Fahrzeugs nach dem vorhergehenden Anspruch, **dadurch gekennzeichnet, dass** sie ferner eine Front (41) umfasst, die über den größten Teil ihrer Oberfläche lichtundurchlässig ist und ein transparentes kreisförmiges Fenster umfasst, das sich gegenüber einem Ende des Trennrohrs, das zu den Lichtquellen entgegengesetzt ist, befindet, wobei das transparente kreisförmige Fenster die Öffnung (101) bildet.

10. Deckenleuchte eines Fahrzeugs nach dem vorhergehenden Anspruch, **dadurch gekennzeichnet, dass** sie ferner ein ringförmiges Fenster gegenüber dem Ausgangsdiopter (57) der ringförmigen Basis des Begrenzungslichtleiters (53) umfasst.

11. Deckenleuchte eines Fahrzeugs nach dem vorhergehenden Anspruch, **dadurch gekennzeichnet, dass** die Front (4) über den größten Teil ihrer Oberfläche eine lichtundurchlässige Beschichtung oder Schicht (43) umfasst und dass die kreisförmigen und ringförmigen Fenster eine Transparenz zwischen 10 und 50 % aufweisen.

12. Deckenleuchte eines Fahrzeugs nach einem der Ansprüche 9 oder 10, **dadurch gekennzeichnet, dass** die Front mindestens eine berührungsempfindliche Oberfläche umfasst, die, wenn ein Kontakt mit einem Körperteil eines Benutzers (U) detektiert wird, die Beleuchtungslichtquelle (31) ein- oder ausschaltet.

13. Deckenleuchte eines Fahrzeugs nach dem vorhergehenden Anspruch, **dadurch gekennzeichnet, dass** die berührungsempfindliche Oberfläche im Bereich der Öffnung (101) angeordnet ist.

14. Deckenleuchte eines Fahrzeugs nach einem der Ansprüche 8 bis 13, **dadurch gekennzeichnet, dass** sie zwei Vorrichtungen (1a, 1b) nach einem der Ansprüche 1 bis 7 umfasst, von denen eine einen Beleuchtungsstrahl in Richtung des Fahrers des Fahrzeugs (Ua) emittiert und die andere einen Beleuchtungsstrahl in Richtung eines vorderen Insassen des Fahrzeugs (Ub) emittiert.

## Claims

1. Light-generating device, for a ceiling light (100) of a vehicle passenger compartment, **characterized in that** it comprises:
- a separating tube (7) made of a material that is opaque to the radiation used and intended to be placed in an aperture (101) forming an exit for illuminating light, and which is tubular along an axis orthogonal to the aperture and has a radial cross section that is "c" shaped, so as to form an axial window (71), a bounding light guide (53), encircling the separating tube (7) having:
- an annular exit dioptric interface (55),
- a base (57) in the axial extension of the exit dioptric interface,
axial extensions (59), which extend the base (57) axially at least in part, comprising, at their end opposite the base (57), entrance dioptric interfaces (61), which are placed facing bounding light sources (51),
- an illuminating light source (31),
- a guide (33) of illuminating light, which is located axially facing the illuminating light source (31) and radially offset from the aperture (101), comprising:
- an entrance dioptric interface (35), placed facing the illuminating light source (31),
- a total-reflection surface (39), from which light entering through the entrance dioptric interface (35) is reflected at a preset angle of inclination to the normal to the entrance dioptric interface (35),
- an exit dioptric interface (37), through which the light reflected from the total-reflection surface (39) is emitted in the direction of the aperture (101),
the axial window (71) being oriented in the direction of the light guide (33) so that the beam generated by the illuminating light source (31) and reflected by the total-reflection surface (39) passes through said axial window (71) and through the aperture (101).

2. Device according to Claim 1, **characterized in that** the axial extensions (59) take the form of axial pillars so that the bounding light guide (53) comprises, for each bounding light source (51), at least one axial pillar (59) integrally formed with and made of the same material as the base (57), each axial pillar (59) forming a light guide for the light emitted by the bounding light sources (51) in the direction of the base (57), and having:
- tangential walls parallel to those of the base (57) and radial walls that flare in the direction of the base (7),
- an upper wall forming an entrance dioptric interface (61) and located facing one of the bounding light sources (51) .

3. Device according to one of the preceding claims, **characterized in that** the base (57) is annular and comprises a segment (63) of material that scatters the light in order to increase the uniformity of the light intensity over the annular area of the exit dioptric interface (53).

4. Device according to one of the preceding claims, **characterized in that** the entrance dioptric interface (35) of the guide of illuminating light takes the form of a Fresnel lens, the illuminating light source (31) being located at the focal point (F) thereof.

5. Device according to one of the preceding claims, **characterized in that** the exit dioptric interface (33) comprises a lens, the aperture (101) being located at the focal point (F) thereof.

6. Device according to one of the preceding claims, **characterized in that** the guide (33) of illuminating light takes the form of a diagonally truncated cylinder, the diagonal truncation surface forming the total-reflection surface (39).

7. Device according to one of Claims 1 to 5, **characterized in that** the guide (33) of illuminating light takes the form of an elbow, comprising two cylindrical segments, one of which bears the entrance dioptric interface (35), and the other the exit dioptric interface (37), the elbow between the two cylindrical segments bearing the total-reflection surface (39).

8. Vehicle ceiling light, **characterized in that** it comprises at least one device (1) according to one of the preceding claims, and **in that** the illuminating beam is oriented toward a location of an occupant (U) of the vehicle.

9. Vehicle ceiling light according to the preceding claim, **characterized in that** it further comprises a façade (41), most of the area of which is opaque and which comprises a transparent circular window located facing an end of the separating tube that is opposite to the light sources, said transparent circular window forming the aperture (101).

10. Vehicle ceiling light according to the preceding claim, **characterized in that** it further comprises an annular window facing the exit dioptric interface (57) of the annular base of the bounding light guide (53).

11. Vehicle ceiling light according to the preceding claim, **characterized in that** the façade (4) comprises an opaque layer or coating (43) over most of its area, and **in that** the circular and annular windows have a transparency comprised between 10 and 50%.

12. Vehicle ceiling light according to either of Claims 9 and 10, **characterized in that** the façade comprises at least one touch surface, which, when contact with a part of the body of a user (U) is detected, turns on or off the illuminating light source (31).

13. Vehicle ceiling light according to the preceding claim, **characterized in that** the touch surface is placed level with the aperture (101).

14. Vehicle ceiling light according to one of Claims 8 to 13, **characterized in that** it comprises two devices (1a, 1b) according to one of Claims 1 to 7, one emitting an illuminating beam in the direction of the driver (Ua) of the vehicle, the other emitting an illuminating beam in the direction of a front passenger (Ub) of the vehicle.
